# EUROPÄISCHE PATENTSCHRIFT

(11) **EP 3 253 624 B1**
(45) Veröffentlichungstag und Bekanntmachung des Hinweises auf die Patenterteilung: **24.10.2018**
(21) Anmeldenummer: 16700737.6
(22) Anmeldetag: 15.01.2016
(51) Int. Cl.: B60R 13/08, B62D 25/20, F16L 59/08

(54) **ABSCHIRMVORRICHTUNG, FAHRGASTZELLE, KRAFTFAHRZEUG UND ABSCHIRMUNGSVERFAHREN**
SHIELDING DEVICE, PASSANGER COMPARTEMENT, MOTOR VEHICLE AND SHIELDING METHOD
DISPOSITIF DE PROTECTION, L'HABITACLE D'UN VÉHICULE, VÉHICULE ET PROCÉDÉ DE PROTECTION

(30) Priorität: 02.02.2015 DE 102015201710
(43) Veröffentlichungstag der Anmeldung: 13.12.2017
(73) Patentinhaber: Bayerische Motoren Werke Aktiengesellschaft, 80809 München (DE)
(72) Erfinder: BÄUMEL, Josef, 85419 Mauern (DE); GREIL, Juergen, 82237 Woerthsee (DE)
(86) Internationale Anmeldenummer: PCT/EP2016/050743
(87) Internationale Veröffentlichungsnummer: WO 2016/124369

(56) Entgegenhaltungen:
- EP-A1- 1 596 121
- DE-A1- 10 202 232
- DE-A1- 19 835 194
- DE-T2- 69 522 950
- US-A1- 2011 302 933

## Beschreibung

Die vorliegende Erfindung betrifft eine Abschirmvorrichtung einer Fahrgastzelle eines Kraftfahrzeugs zum Abschirmen eines Innenraums der Fahrgastzelle gegenüber einem Wasserstofftank im Kraftfahrzeug. Des Weiteren betrifft die Erfindung eine Fahrgastzelle eines Kraftfahrzeugs sowie ein Kraftfahrzeug. Überdies betrifft die Erfindung ein Verfahren zum Abschirmen eines Innenraums einer Fahrgastzelle eines Kraftfahrzeugs gegenüber einem Wasserstofftank im Kraftfahrzeug.

Antriebskonzepte für Kraftfahrzeuge auf der Basis fossiler Kraftstoffe haben die Automobilindustrie über Jahrzehnte dominiert, da fossile Kraftstoffe eine relativ hohe Energiedichte aufweisen und mit einfachen Mitteln sowie relativ sicher in entsprechenden Tanks lagerbar sind. Allerdings haben fossile Kraftstoffe den Nachteil, dass ihre Vorkommen nur begrenzt verfügbar sind und demnach, insbesondere wegen einer stetig steigenden Weltnachfrage nach Energie zur Fortbewegung oder Stromerzeugung, langfristig nicht zur Verfügung stehen werden. Des Weiteren entstehen bei der Verbrennung fossiler Kraftstoffe Schadstoffe, wie z.B. Kohlendiodid und Kohlenmonoxid, die sich insbesondere negativ auf das Weltklima auswirken.

Daher wird insbesondere in der Automobilindustrie nach neuen Antriebskonzepten geforscht, die auf alternativen Energieträgern beruhen. Hierbei werden insbesondere Energieträger gesucht, die eine besonders hohe Energiedichte aufweisen und somit relativ zu ihrer gespeicherten Energie ein geringes Volumen bzw. eine geringe Masse aufweisen, da ein zur Speicherung des Energieträgers vorhandener Bauraum bei Kraftfahrzeugen stark begrenzt ist.

Ein alternatives Antriebskonzept zur Verbrennung fossiler Kraftstoffe, wie z.B. Benzin, ist die Wasserstofftechnologie, da flüssiger Wasserstoff eine relativ hohe Energiedichte aufweist und beispielsweise zum Antreiben eines Elektromotors in einer Brennstoffzelle in elektrische Energie umwandelbar ist. Des Weiteren sind Rohstoffe für die Gewinnung von Wasserstoff nahezu unbegrenzt vorhanden, wobei die Wirtschaftlichkeit von Verfahren zur Gewinnung von Wasserstoff regelmäßig verbessert wird.

Ein großer Nachteil der Wasserstofftechnologie ist die Betriebssicherheit bei Kraftfahrzeugen, insbesondere im Zusammenhang mit Unfallsituationen. Wasserstoff ist bei 20°C und 1000 hPa gasförmig sowie hoch explosibel. Demnach werden beispielsweise an einen zur Speicherung von Wasserstoff ausgebildeten Wasserstofftank besonders hohe Anforderungen gestellt, so dass bei der Konzeption des Wasserstofftanks eines auf der Wasserstofftechnologie basierenden Kraftfahrzeugs auch etwaige Unfallsituationen zu berücksichtigen sind.

Wegen der hohen vom Wasserstoff ausgehenden Explosionsgefahr sind weitere konstruktive Vorkehrungen am Kraftfahrzeug vorzunehmen, die einer etwaigen zum Austritt von Wasserstoff führenden Beschädigung des Wasserstofftanks Rechnung tragen. Hierzu zählt beispielsweise, dass ein Eindringen von Wasserstoff aus einem defekten Wasserstofftank in die Fahrgastzelle durch konstruktive Maßnahmen zu vermeiden ist, da ein derartiges Eindringen wegen einer hiermit verbundenen Explosionsgefahr eine hohe Gefährdung für einen Fahrer des Kraftfahrzeugs bedeutet.

Ein weiterer Ansatz zur Konstruktion fortschrittlicher Kraftfahrzeuge basiert auf der Reduzierung des Gesamtgewichts des Kraftfahrzeugs, da zum Beschleunigen einer geringeren Masse auch weniger Energie erforderlich ist. Hierbei haben sich Faserverstärkte Werkstoffe bzw. Faserverbundwerkstoffe bewährt, da diese bei relativ geringem Eigengewicht eine relativ hohe Festigkeit aufweisen. Daher weisen moderne Fahrgastzellen zur Abschirmung vor äußeren Einflüssen bei möglichst geringem Fahrzeuggewicht Wände auf, die Faserverbundwerkstoffe aufweisen bzw. im Wesentlichen aus Faserverbundwerkstoffen gebildet sind.

Wände aus Faserverbundwerkstoff haben den Nachteil, dass diese verglichen mit Wänden aus Metall eine relativ schlechte Abschirmung gegenüber einem Wasserstofftank aufweisen und Wasserstoff relativ leicht durch Wände aus Faserverbundwerkstoff diffundieren kann. Dieser Vorgang wird auch als Wasserstoffpermeation bezeichnet. Daher weisen derartige Kraftfahrzeuge Abschirmbleche aus Metall auf, die zwischen dem Wasserstofftank und der Außenwand der Fahrgastzelle angeordnet werden. Der Wasserstoff kann nicht durch die Abschirmbleche durchdringen und entweicht seitlich. Somit ist ein Eindringen des Wasserstoffs in die Fahrgastzelle wirksam vermeidbar.

Derartige Abschirmbleche haben den großen Nachteil, dass sie einen zusätzlichen Bauraum benötigen, und somit der Wasserstofftank bei gleicher Fahrzeuggröße kleiner dimensioniert werden muss. Ein weiterer Nachteil der Abschirmbleche ist, dass das Gesamtgewicht des Kraftfahrzeugs durch das Abschirmblech erhöht wird.

Aus der nächstliegenden DE 695 22 950 T2 ist eine Außenplatte eines Türaufbaus bekannt, welche einen faserverstärkten Kunststoff aufweist, der mit einer Metallfolie verpresst ist. Die EP 1 596 121 A1 offenbart einen thermischen Schild mit einem wärmeleitenden Körper. Die DE 102 02 232 A1 zeigt eine Abschirmung für einen Motoren- und Auspuffbereich, welche einen Schichtaufbau aufweist. Aus der US 2011/302933 A1 ist ein Wasserstofftank bekannt, welcher an einer Innenseite eine Beschichtung aus einem Katalysator aufweist. Die DE 198 35 194 A1 betrifft eine Folie zum Beschichten von Automobilaußenteilen mit einer Trägerschicht sowie ein Lackschicht.

Es ist daher die Aufgabe der vorliegenden Erfindung, die voranstehend beschriebenen Nachteile des Stands der Technik zumindest teilweise zu beheben. Insbesondere ist es die Aufgabe der vorliegenden Erfindung, eine Abschirmvorrichtung einer Fahrgastzelle eines Kraftfahrzeugs zum Abschirmen eines Innenraums der Fahrgastzelle gegenüber einem Wasserstofftank im Kraftfahrzeug, eine Fahrgastzelle sowie ein Kraftfahrzeug bereitzustellen, die einen verbesserten Schutz des Innenraums der Fahrgastzelle gegenüber einem Wasserstofftank aufweisen. Ferner ist es die Aufgabe der vorliegenden Erfindung, ein Verfahren zum Abschirmen eines Innenraums einer Fahrgastzelle eines Kraftfahrzeugs gegenüber einem Wasserstofftank im Kraftfahrzeug bereitzustellen, das einen verbesserten Schutz des Innenraums der Fahrgastzelle gegenüber einem Wasserstofftank gewährleistet.

Die voranstehende Aufgabe wird erfindungsgemäß gelöst durch eine Abschirmvorrichtung einer Fahrgastzelle eines Kraftfahrzeugs zum Abschirmen eines Innenraums der Fahrgastzelle gegenüber einem Wasserstofftank im Kraftfahrzeug mit den Merkmalen des unabhängigen Anspruchs 1. Ferner wird die Aufgabe erfindungsgemäß gelöst durch eine Fahrgastzelle eines Kraftfahrzeugs gemäß Anspruch 8 sowie durch ein Kraftfahrzeug gemäß Anspruch 9. Des Weiteren wird die Aufgabe gelöst durch ein Verfahren zum Abschirmen eines Innenraums einer Fahrgastzelle eines Kraftfahrzeugs gegenüber einem Wasserstofftank im Kraftfahrzeug mit den Merkmalen des unabhängigen Anspruchs 10.

Weitere Merkmale der Erfindung ergeben sich aus den Unteransprüchen, der Beschreibung und den Zeichnungen. Dabei gelten Merkmale und Details, die im Zusammenhang mit der erfindungsgemäßen Abschirmvorrichtung beschrieben sind, selbstverständlich auch im Zusammenhang mit der erfindungsgemäßen Fahrgastzelle, dem erfindungsgemäßen Fahrzeug sowie dem erfindungsgemäßen Verfahren zum Abschirmen eines Innenraums einer Fahrgastzelle eines Kraftfahrzeugs gegenüber einem Wasserstofftank im Kraftfahrzeug und jeweils umgekehrt, so dass bezüglich der Offenbarung zu den einzelnen Erfindungsaspekten stets wechselseitig Bezug genommen wird, bzw. werden kann. Die erfindungsgemäße Abschirmvorrichtung und die erfindungsgemäße Fahrgastzelle können selbstverständlich auch im Rahmen des Verfahrens zum Abschirmen eines Innenraums einer Fahrgastzelle eines Kraftfahrzeugs gegenüber einem Wasserstofftank im Kraftfahrzeug verwendet werden.

Die erfindungsgemäße Abschirmvorrichtung einer Fahrgastzelle eines Kraftfahrzeugs zum Abschirmen eines Innenraums der Fahrgastzelle gegenüber einem Wasserstofftank im Kraftfahrzeug weist einen Grundkörper auf. Der Grundkörper weist einen Faserverbundwerkstoff mit einer wasserstoffpermeationshemmenden Beschichtung auf und ist als Wand oder Wandabschnitt der Fahrgastzelle ausgebildet.

Eine Abschirmvorrichtung ist im Sinne der Erfindung eine Vorrichtung, die ein Objekt oder einen Raum vor einem Einwirken eines Mediums, insbesondere gasförmigen Wasserstoffs, zumindest im Bereich der Abschirmvorrichtung schützt. Die erfindungsgemäße Abschirmvorrichtung ist demnach derart ausgebildet, eine Permeation von Wasserstoff durch die Abschirmvorrichtung zu blockieren bzw. zumindest wesentlich zu hemmen. Dabei ist eine Hemmwirkung der Abschirmvorrichtung gegen Wasserstoffpermeation deutlich höher als bei einem Bauteil gleicher Dimension, das keine wasserstoffpermeationshemmende Beschichtung 5 aufweist.

Der Innenraum des Kraftfahrzeugs ist ein der Raum, der insbesondere zur Aufnahme der Sitze und Armaturen des Kraftfahrzeugs ausgebildet ist. Es kann vorgesehen sein, dass ein Kofferraum im Sinne der Erfindung als Bestandteil des Innenraums gilt. Dies ist insbesondere dann der Fall, wenn der Wasserstofftank außerhalb des Kofferraums angeordnet ist.

Der Innenraum ist von der Fahrgastzelle umgeben. Die Fahrgastzelle weist zumindest mindestens eine Wand auf, die den Innenraum nach außen abschirmt, z.B. vor Feuchtigkeit, Schmutz, Wärme, Sonnenstrahlung oder dergleichen. Vorzugsweise weist die Fahrgastzelle mehrere Wände auf. Mindestens eine Wand weist einen Faserverbundwerkstoff auf oder ist aus einem Faserverbundwerkstoff gebildet oder zumindest im Wesentlichen gebildet. Bevorzugt ist ein besonders hoher Anteil an Faserverbundwerkstoff je Wand, wobei weiter bevorzugt ist, dass möglichst viele Wände der Fahrgastzelle einen Faserverbundwerkstoff aufweisen. Auf diese Weise ist ein Fahrzeuggewicht reduzierbar.

Der Grundkörper der Abschirmvorrichtung ist als Wand oder Wandabschnitt der Fahrgastzelle ausgebildet und schirmt somit den Innenraum der Fahrgastzelle zumindest in eine Richtung nach außen ab. Der Grundkörper weist einen Faserverbundwerkstoff auf. Vorzugsweise ist der Grundkörper aus einem Faserverbundwerkstoff gebildet oder zumindest im Wesentlichen gebildet. Der Grundkörper weist eine wasserstoffpermeationshemmende Beschichtung auf. Eine wasserstoffpermeationshemmende Beschichtung ist eine Beschichtung, die von Wasserstoff nicht oder nur sehr schwer durchdringbar ist. Somit ist eine Wasserstoffpermeabilität eines Grundkörpers mit einer solchen wasserstoffpermeationshemmenden Beschichtung deutlich geringer als bei einem Grundkörper, der keine wasserstoffpermeationshemmende Beschichtung aufweist.

Die wasserstoffpermeationshemmende Beschichtung ist vorzugsweise auf mindestens einer Seite des Grundkörpers angeordnet, kann aber auch beidseitig angeordnet sein. Besonders bevorzugt weist die Seite des Grundkörpers die wasserstoffpermeationshemmende Beschichtung auf, die dem Wasserstofftank zugewandt ist. Dies hat den Vorteil, dass ein Eindringen von Wasserstoff in den Grundkörper verhindert bzw. im Wesentlichen verhindert wird.

Als Faserverbundwerkstoff ist ein faserverstärkter Kunststoff besonders bevorzugt. Als Verstärkungsfasern werden Kohlenstofffasern, Glasfasern oder Aramidfasern bevorzugt.

Die erfindungsgemäße Abschirmvorrichtung einer Fahrgastzelle eines Kraftfahrzeugs zum Abschirmen eines Innenraums der Fahrgastzelle gegenüber einem Wasserstofftank im Kraftfahrzeug hat den Vorteil, dass mit einfachen Mitteln ein Innenraum gegenüber einem Wasserstofftank abschirmbar ist. Hierbei wird ein Fahrzeuggewicht nur marginal erhöht, da kein zusätzliches Abschirmblech für die Fahrgastzelle erforderlich ist und die Beschichtung ein vernachlässigbares Eigengewicht aufweist. Da der Grundkörper einen Faserverbundwerkstoff aufweist bzw. im Wesentlichen aus einem Faserverbundwerkstoff gebildet ist, hat der Grundkörper ein geringeres Eigengewicht als ein vergleichbares Blech aus Metall. Ein weiterer Vorteil ist, dass durch das Einsparen eines zusätzlichen Abschirmblechs innerhalb eines vorhandenen Bauraums mehr Platz für den Wasserstofftank ist, so dass dieser größer dimensioniert werden kann, um mehr Wasserstoff aufzunehmen. Hierdurch wird eine Reichweite des Fahrzeugs auf kostengünstige Weise vergrößert.

Erfindungsgemäß weist die wasserstoffpermeationshemmende Beschichtung metallische Pigmente auf. Derartige Pigmente sind für die Beschichtung besonders gut geeignet, da Metalle sehr gute wasserstoffpermeationshemmende Eigenschaften aufweisen.

Gemäß einer vorteilhaften Ausgestaltung der Erfindung weist die wasserstoffpermeationshemmende Beschichtung Cu- und/oder Al-Pigmente auf. Derartige Pigmente sind kostengünstig und haben besonders gute wasserstoffpermeationshemmende Eigenschaften.

Ebenfalls vorteilhaft sind die metallischen Pigmente plattenförmig und/oder plättchenförmig ausgebildet. Unter plattenförmig und plättchenförmig wird im Sinne der Erfindung eine räumliche Ausbildung verstanden, bei der ein Verhältnis von Seitenlängen zur Dicke eines Objekts besonders groß ist. Derartige Pigmente haben den Vorteil, dass diese zum im Wesentlichen dichten Abdecken einer Oberfläche des Grundkörpers unter Ausbildung einer relativ dünnen Schichtdicke besonders geeignet sind.

Vorzugsweise weist die wasserstoffpermeationshemmende Beschichtung einen Lack zum Binden metallischer Pigmente. Ein Lack hat den Vorteil, dass eine gute Bindungswirkung zwischen Grundkörper und Lack mit Pigmenten erzielbar ist. Des Weiteren ermöglicht ein Lack auch ein Benetzen von schwer zugänglichen Konturen des Grundkörpers, wie z.B. etwaigen Hinterschneidungen. Somit ist eine durchgängige Beschichtung auf den Grundkörper aufbringbar.

Besonders bevorzugt ist die Abschirmvorrichtung als Bodenwand oder Bodenwandabschnitt der Fahrgastzelle ausgebildet. Wasserstoff ist leichter als Luft, so dass freigesetzter Wasserstoff nach oben entweicht. Ferner sind Wasserstofftanks oftmals unterhalb der Fahrgastzelle angeordnet. Aus einem derartigen, defekten Wasserstofftank entweichender Wasserstoff entweicht demnach in Richtung zur Bodenwand der Fahrgastzelle. Daher ist eine wasserstoffpermeationshemmende Beschichtung besonders vorteilhaft.

In einer vorteilhaften Ausführungsform der Erfindung ist auf der wasserstoffpermeationshemmenden Beschichtung eine Schutzbeschichtung angeordnet, wobei die Schutzbeschichtung eine höhere chemische und/oder physikalische Beständigkeit als die wasserstoffpermeationshemmende Beschichtung aufweist. Eine chemische Beständigkeit ist in diesem Fall insbesondere in Bezug auf chemische Stoffe gerichtet, denen die wasserstoffpermeationshemmende Beschichtung im bestimmungsgemäßen Gebrauch ausgesetzt ist, wie z.B. Streusalz. Eine physikalische Beständigkeit ist in diesem Fall insbesondere in Bezug auf physikalische Belastungen gerichtet, denen die wasserstoffpermeationshemmende Beschichtung im bestimmungsgemäßen Gebrauch ausgesetzt ist, wie z.B. Temperaturschwankungen oder Vibrationen. Eine Schutzbeschichtung hat demnach den Vorteil, dass eine Beständigkeit der wasserstoffpermeationshemmenden Beschichtung verbessert wird.

Des Weiteren wird die Aufgabe erfindungsgemäß gelöst durch eine Fahrgastzelle eines Kraftfahrzeugs, wobei die Fahrgastzelle mindestens eine Außenwand zum Abgrenzen der Fahrgastzelle zu einer Umgebung der Fahrgastzelle aufweist. Dabei ist die mindestens eine Außenwand zumindest teilweise als erfindungsgemäße Abschirmungsvorrichtung ausgebildet. Eine erfindungsgemäße Fahrgastzelle hat den Vorteil, dass bei konstanter Baugröße eines Kraftfahrzeugs ein größerer Wasserstofftank als bei herkömmlichen Fahrgastzellen anordenbar ist, wobei der Innenraum gegenüber einem Wasserstofftank wirksam abgeschirmt wird.

Ferner wird die Aufgabe erfindungsgemäß gelöst durch ein Kraftfahrzeug mit einem Wasserstofftank, das eine erfindungsgemäße Fahrgastzelle aufweist. Vorzugsweise ist zumindest ein dem Wasserstofftank benachbarter ein Wandabschnitt der Fahrgastzelle als Abschirmvorrichtung ausgebildet. Besonders bevorzugt ist ein größerer Wandabschnitt bzw. die komplette tankseitige Wand als Abschirmvorrichtung ausgebildet.

Ein erfindungsgemäßes Kraftfahrzeug hat den Vorteil, dass bei konstanter Baugröße eines Kraftfahrzeugs ein größerer Wasserstofftank als bei herkömmlichen Kraftfahrzeugen anordenbar ist, wobei der Innenraum der Fahrgastzelle gegenüber einem Wasserstofftank wirksam abgeschirmt wird.

Ebenfalls wird die Aufgabe erfindungsgemäß gelöst durch ein Verfahren zum Abschirmen eines Innenraums einer Fahrgastzelle eines Kraftfahrzeugs gegenüber einem Wasserstofftank im Kraftfahrzeug. Das Verfahren weist folgende Schritte auf:
- Bereitstellen einer Fahrgastzelle mit mindestens einer Außenwand, wobei die mindestens eine Außenwand einen Grundkörper aufweist, wobei der Grundkörper einen Faserverbundwerkstoff aufweist sowie zwischen dem Innenraum und einer Aufnahme für einen Wasserstofftank angeordnet ist, und
- Aufbringen einer wasserstoffpermeationshemmenden Beschichtung auf den Grundkörper, die wasserstoffpermeationshemmende Beschichtung metallische Pigmente aufweist.

Es ist im Rahmen der Erfindung nicht erheblich, in welcher Reihenfolge diese Verfahrensschritte ausgeführt werden, so dass im Rahmen der Erfindung vorgesehen sein kann, dass der Grundkörper zunächst mit der wasserstoffpermeationshemmenden Beschichtung beschichtet und anschließend für das Bereitstellen der Fahrgastzelle verwendet wird. Bevorzugt wird allerdings zunächst die Fahrgastzelle mit der mindestens einen Außenwand bereitgestellt und der Grundkörper anschließend beschichtet.

Das Aufbringen der wasserstoffpermeationshemmenden Beschichtung erfolgt vorzugsweise über ein Sprühverfahren. Alternativ kann dies nach einem nahezu beliebigen aus dem Stand der Technik bekannten Beschichtungsverfahren erfolgen. Es ist bevorzugt, dass eine möglichst gleichmäßige wasserstoffpermeationshemmenden Beschichtung erzeugt wird, wobei vorzugsweise auch Hinterschneidungen, Ecken und Kanten des Grundkörpers beschichtet werden.

Das erfindungsgemäße Verfahren hat den Vorteil, dass mit einfachen Mitteln sowie kostengünstig der Innenraum gegenüber einem Wasserstofftank abgeschirmt wird. Dabei wird ein Fahrzeuggewicht im Wesentlichen nicht erhöht. Des Weiteren ermöglicht das erfindungsgemäße Verfahren dass bei konstanter Baugröße des Kraftfahrzeugs ein größerer Wasserstofftank an dem Kraftfahrzeug anordenbar ist als bei herkömmlichen Verfahren.

Erfindungsgemäß weist die wasserstoffpermeationshemmende Beschichtung metallisehe Pigmente auf. Derartige Pigmente sind für die Beschichtung besonders gut geeignet, da Metalle sehr gute wasserstoffpermeationshemmende Eigenschaften aufweisen.

Besonders bevorzugt wird auf der wasserstoffpermeationshemmenden Beschichtung eine Schutzbeschichtung aufgebracht, wobei die Schutzbeschichtung eine höhere chemische und/oder physikalische Beständigkeit als die wasserstoffpermeationshemmende Beschichtung aufweist. Eine Schutzbeschichtung hat demnach den Vorteil, dass eine Beständigkeit der wasserstoffpermeationshemmenden Beschichtung verbessert wird.

Im Folgenden soll die Erfindung anhand eines bevorzugten Ausführungsbeispiels näher erläutert werden.

Es zeigen jeweils schematisch:
- Figur 1: eine Seitenansicht auf eine bevorzugte Ausführungsform einer erfindungsgemäßen Fahrgastzelle mit einer erfindungsgemäßen Abschirmvorrichtung,
- Figur 2: ein vergrößerter Ausschnitt der Abschirmvorrichtung aus Figur 2, und
- Figur 3: ein Flussdiagramm einer Ausführungsform des erfindungsgemäßen Verfahrens

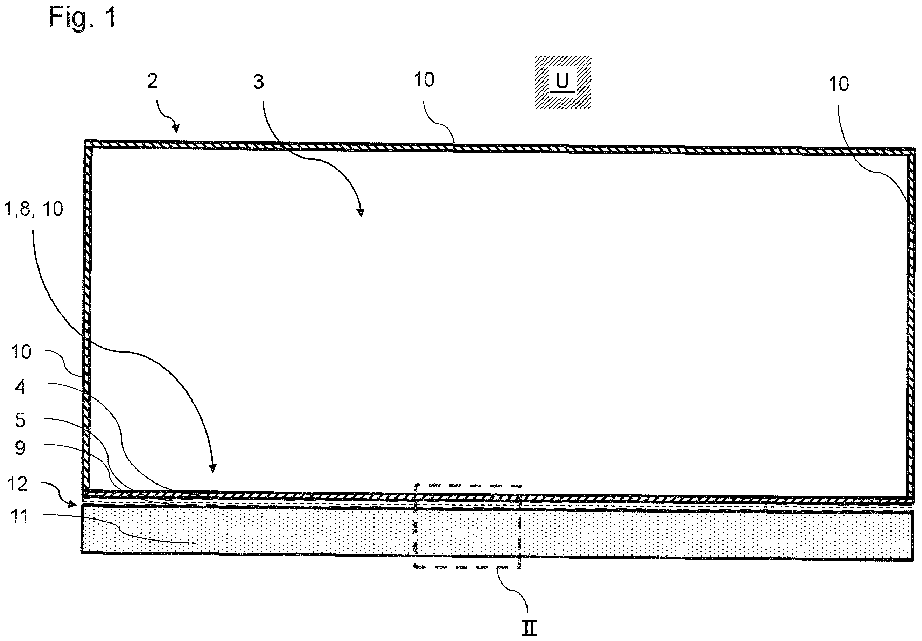

Fig. 1 zeigt in einer Seitenansicht eine erfindungsgemäße Fahrgastzelle 2 mit einem darunter an einer Aufnahme 12 angeordneten Wasserstofftank 11, der sich in diesem Beispiel im Wesentlichen über eine gesamte Länge der Fahrgastzelle 2 erstreckt.

Die Fahrgastzelle 2 weist einen Innenraum 3 auf, der von Außenwänden 10 umgeben und somit vor äußeren Einflüssen, wie z.B. Regen oder Wind, geschützt ist. Eine untere Außenwand 10 ist als Bodenwand 8 ausgebildet, wobei in dieser Ausführungsform die gesamte Bodenwand 8 als Abschirmvorrichtung 1 ausgebildet ist. Dies ist von Vorteil, da sich der Wasserstofftank 11 in diesem Ausführungsbeispiel zumindest im Wesentlichen über die gesamte Länge der Bodenwand 8 erstreckt.

Die Abschirmvorrichtung 1 weist einen Grundkörper 4 mit einer wasserstoffpermeationshemmenden Beschichtung 5 auf, die zwischen dem Wasserstofftank 11 und dem Grundkörper angeordnet ist. Aus dem Wasserstofftank 11 entweichender Wasserstoff wird somit durch die wasserstoffpermeationshemmende Beschichtung 5 der Abschirmvorrichtung 1 am Eindringen in den Innenraum 3 der Fahrgastzelle 2 über die Bodenwand 8 gehindert.

In diesem Ausführungsbeispiel weist die Abschirmvorrichtung 1 eine optionale Schutzbeschichtung 9 auf, wobei die wasserstoffpermeationshemmende Beschichtung 5 zwischen der Schutzbeschichtung 9 und dem Grundkörper 4 angeordnet ist. Die Schutzbeschichtung 9 schützt die wasserstoffpermeationshemmende Beschichtung 5 beispielsweise vor Erosion.

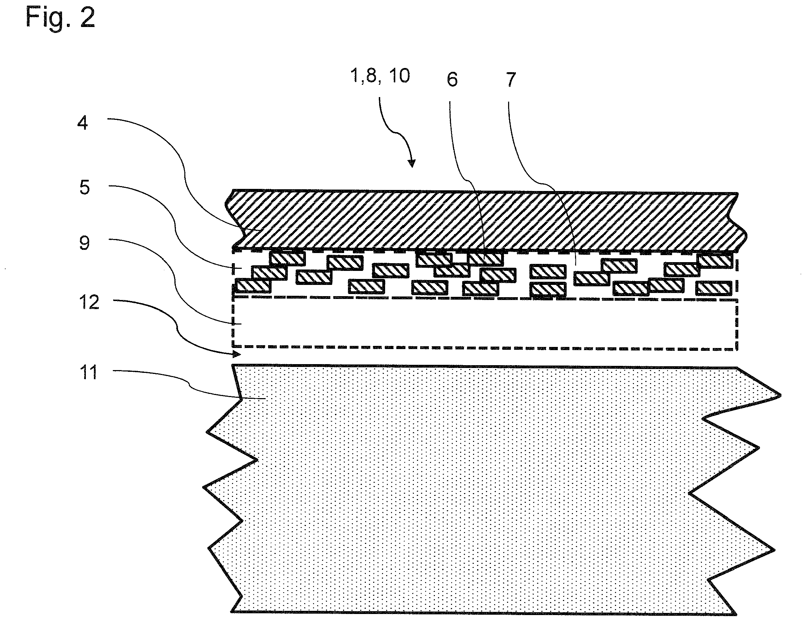

Fig. 2 zeigt einen vergrößerten Ausschnitt der Abschirmvorrichtung 1 sowie des Wasserstofftanks 11 aus Fig. 1 Aus Fig. 2 wird insbesondere ersichtlich, dass die wasserstoffpermeationshemmende Beschichtung 5 in dieser Ausführungsform einen Lack 7 aufweist, in dem plattenförmige metallische Pigmente 6 angeordnet sind. Derartige Pigmente 6 sind zur Hemmung einer Wasserstoffpermeation besonders geeignet. Die Pigmente 6 bilden vorzugsweise eine durchgängige bzw. im Wesentlichen durchgängige Schicht, da Zwischenräume zwischen den Pigmenten 6 eine schlechtere Hemmung der Wasserstoffpermeation als die Pigmente 6 bewirken. Eine derartige Anordnung begünstigt somit ein effizientes Abschirmen des Grundkörpers 4 gegenüber Wasserstoff. Auf der wasserstoffpermeationshemmenden Beschichtung 5 ist eine Schutzbeschichtung 9 aufgebracht.

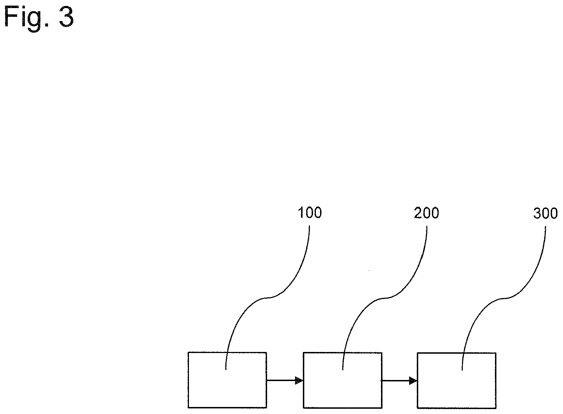

Fig. 3 zeigt in einem Flussdiagramm eine bevorzugte Ausführungsform des erfindungsgemäßen Verfahrens. In einem ersten Verfahrensschritt 100 wird eine Fahrgastzelle 2 mit mindestens einer Außenwand 10 bereitgestellt, wobei die mindestens eine Außenwand 10 einen Grundkörper 4 aufweist. Bei einer Anordnung von Fahrgastzelle 2 und Wasserstofftank 11 nach Fig. 1 ist die mindestens eine Außenwand 10 als Bodenwand 8 ausgebildet. Der Grundkörper 4 weist einen Faserverbundwerkstoff auf und ist zwischen dem Innenraum 3 und einer Aufnahme 12 für den Wasserstofftank 11 angeordnet.

In einem zweiten Verfahrensschritt 200 wird eine wasserstoffpermeationshemmende Beschichtung 5 auf den Grundkörper 4 aufgebracht. Hierbei ist es vorteilhaft, wenn die wasserstoffpermeationshemmende Beschichtung 5 auch auf Ecken, Kanten und/oder Hinterschneidungen des Grundkörpers 4 aufgebracht wird, um eine möglichst wirkungsvolle Abschirmung des Grundkörpers 4 gegenüber Wasserstoff zu erzielen.

In einem dritten Verfahrensschritt 300 wird auf der wasserstoffpermeationshemmenden Beschichtung 5 eine Schutzbeschichtung 9 aufgebracht. Die Schutzbeschichtung 9 weist eine höhere chemische und/oder physikalische Beständigkeit als die wasserstoffpermeationshemmende Beschichtung 5 auf. Somit wird die wasserstoffpermeationshemmende Beschichtung 5 vor äußeren Einwirkungen geschützt. Diese Schutzbeschichtung 9 ist optional.

### Bezugszeichenliste

- 1: Abschirmvorrichtung
- 2: Fahrgastzelle
- 3: Innenraum
- 4: Grundkörper
- 5: wasserstoffpermeationshemmende Beschichtung
- 6: Pigment
- 7: Lack
- 8: Bodenwand
- 9: Schutzbeschichtung
- 10: Außenwand
- 11: Wasserstofftank
- 12: Aufnahme
- U: Umgebung
- 100: erster Verfahrensschritt
- 200: zweiter Verfahrensschritt
- 300: dritter Verfahrensschritt

## Patentansprüche

1. Abschirmvorrichtung (1) einer Fahrgastzelle (2) eines Kraftfahrzeugs zum Abschirmen eines Innenraums (3) der Fahrgastzelle (2) gegenüber einem Wasserstofftank (11) im Kraftfahrzeug, aufweisend einen Grundkörper (4), wobei der Grundkörper (4) einen Faserverbundwerkstoff mit einer wasserstoffpermeationshemmenden Beschichtung (5) aufweist und als Wand oder Wandabschnitt der Fahrgastzelle ausgebildet ist,
**dadurch gekennzeichnet, dass** die wasserstoffpermeationshemmende Beschichtung metallische Pigmente (6) aufweist.

2. Abschirmvorrichtung (1) nach Anspruch 1,
**dadurch gekennzeichnet, dass**
die wasserstoffpermeationshemmende Beschichtung Cu- und/oder AI-Pigmente (6) aufweist.

3. Abschirmvorrichtung (1) nach Anspruch 1 oder 2,
**dadurch gekennzeichnet, dass**
die metallischen Pigmente (6) plattenförmig und/oder plättchenförmig ausgebildet sind.

4. Abschirmvorrichtung (1) nach einem der vorangehenden Ansprüche,
**dadurch gekennzeichnet, dass**
die wasserstoffpermeationshemmende Beschichtung (5) einen Lack (7) zum Binden metallischer Pigmente (6) aufweist.

5. Abschirmvorrichtung (1) nach Anspruch 4,
**dadurch gekennzeichnet, dass**
die Abschirmvorrichtung (1) als Bodenwand (8) oder Bodenwandabschnitt der Fahrgastzelle ausgebildet ist.

6. Abschirmvorrichtung (1) nach einem der vorangehenden Ansprüche
**dadurch gekennzeichnet, dass**
auf der wasserstoffpermeationshemmenden Beschichtung (5) eine Schutzbeschichtung (9) angeordnet ist, wobei die Schutzbeschichtung (9) eine höhere chemische und/oder physikalische Beständigkeit als die wasserstoffpermeationshemmende Beschichtung (5) aufweist.

7. Fahrgastzelle (2) eines Kraftfahrzeugs, wobei die Fahrgastzelle (2) mindestens eine Außenwand (10) zum Abgrenzen der Fahrgastzelle (2) zu einer Umgebung (U) der Fahrgastzelle aufweist,
**dadurch gekennzeichnet, dass**
die mindestens eine Außenwand (10) zumindest teilweise als Abschirmungsvorrichtung (1) nach einem der vorangehenden Ansprüche ausgebildet ist.

8. Kraftfahrzeug mit einem Wasserstofftank (11) und einer Fahrgastzelle (2), **dadurch gekennzeichnet, dass**
die Fahrgastzelle (2) als Fahrgastzelle (2) nach Anspruch 7 ausgebildet ist.

9. Verfahren zum Abschirmen eines Innenraums (3) einer Fahrgastzelle (2) eines Kraftfahrzeugs gegenüber einem Wasserstofftank im Kraftfahrzeug, aufweisend die Schritte:
- Bereitstellen einer Fahrgastzelle (2) mit mindestens einer Außenwand (10), wobei die mindestens eine Außenwand (10) einen Grundkörper (4) aufweist, wobei der Grundkörper (4) einen Faserverbundwerkstoff aufweist sowie zwischen dem Innenraum (3) und einer Aufnahme (12) für einen Wasserstofftank (11) angeordnet ist, und
- Aufbringen einer wasserstoffpermeationshemmenden Beschichtung (5) auf den Grundkörper (4), wobei die wasserstoffpermeationshemmende Beschichtung (5) metallische Pigmente (6) aufweist.

10. Verfahren nach Anspruch 9,
**dadurch gekennzeichnet, dass**
auf der wasserstoffpermeationshemmenden Beschichtung (5) eine Schutzbeschichtung (9) aufgebracht wird, wobei die Schutzbeschichtung (9) eine höhere chemische und/oder physikalische Beständigkeit als die wasserstoffpermeationshemmende Beschichtung (5) aufweist.

## Claims

1. A shielding device (1) of a passenger compartment (2) of a motor vehicle for shielding an interior (3) of the passenger compartment (2) from a hydrogen tank (11) in the motor vehicle, having a basic body (4),
wherein
the basic body (4) has a fibre composite material with a hydrogen permeation-inhibiting coating (5) and is designed as a wall or wall portion of the passenger compartment,
**characterised in that** the hydrogen permeation-inhibiting coating has metallic pigments (6).

2. A shielding device (1) according to Claim 1,
**characterised in that**
the hydrogen permeation-inhibiting coating has Cu and/or Al pigments (6).

3. A shielding device (1) according to Claim 1 or Claim 2,
**characterised in that**
the metal pigments (6) are in the shape of a plate and/or of a small plate.

4. A shielding device (1) according to one of the preceding claims,
**characterised in that**
the hydrogen permeation-inhibiting coating (5) has a coating (7) for binding metallic pigments (6).

5. A shielding device (1) according to Claim 4,
**characterised in that**
the shielding device (1) is designed as a floor wall (8) or floor wall portion of the passenger compartment.

6. A shielding device (1) according to one of the preceding claims,
**characterised in that**
a protective coating (9) is arranged on the hydrogen permeation-inhibiting coating (5), the protective coating (9) having a greater chemical and/or physical resistance than the hydrogen permeation-inhibiting coating (5).

7. A passenger compartment (2) of a motor vehicle, wherein the passenger compartment (2) has at least one outer wall (10) for delimiting the passenger compartment (2) from surroundings (U) of the passenger compartment,
**characterised in that**
the at least one outer wall (10) is designed at least partially as a shielding device (1) according to one of the preceding claims.

8. A motor vehicle with a hydrogen tank (11) and a passenger compartment (2),
**characterised in that**
the passenger compartment (2) is formed as a passenger compartment (2) according to Claim 7.

9. A method for shielding an interior (3) of a passenger compartment (2) of a motor vehicle from a hydrogen tank in the motor vehicle, having the following steps:
- making available a passenger compartment (2) with at least one outer wall (10), wherein the at least one outer wall (10) has a basic body (4), wherein the basic body (4) has a fibre composite material and also is arranged between the interior (3) and a receptacle (12) for a hydrogen tank (11), and
- applying a hydrogen permeation-inhibiting coating (5) to the basic body (4), wherein the hydrogen permeation-inhibiting coating (5) has metallic pigments (6).

10. A method according to Claim 9,
**characterised in that**
a protective coating (9) is applied to the hydrogen permeation-inhibiting coating (5), the protective coating (9) having a greater chemical and/or physical resistance than the hydrogen permeation-inhibiting coating (5).

## Revendications

1. Dispositif de protection (1) d'une cellule (2) d'habitacle d'un véhicule automobile pour protéger le volume intérieur (3) de la cellule (2) par rapport à un réservoir d'hydrogène (11), équipant le véhicule et comprenant un corps de base (4) dans lequel,
le corps de base (4) comporte un matériau composite renforcé de fibres avec un revêtement (5) bloquant la perméation de l'hydrogène et il est réalisé comme paroi ou segment paroi de la cellule d'habitacle, dispositif **caractérisé en ce que**
le revêtement bloquant la perméation de l'hydrogène contient des piments métalliques (6).

2. Dispositif de protection (1) selon la revendication1,
**caractérisé en ce que**
le revêtement bloquant perméation de l'hydrogène comporte les pigments de Cu-et/ou Al (6).

3. Dispositif de protection (1) selon la revendication 1 ou 2,
**caractérisé en ce que**
les pigments métalliques (6) sont sous la forme de plaquettes et/ou de petites plaquettes.

4. Dispositif de protection (1) selon l'une quelconques des revendications précédentes,
**caractérisé en ce que**
le revêtement (5) bloquant la perméation de l'hydrogène est un vernis (7) pour fixer les pigments métalliques (6).

5. Dispositif de protection (1) selon la revendication 4,
**caractérisé en ce que**
le revêtement de protection (5) est la paroi (8) près du plancher et/ou un segment de paroi de plancher de la cellule d'habitacle.

6. Dispositif de protection (1) selon l'une quelconques des revendications précédentes,
**caractérisé en ce que**
le revêtement (5) bloquant la perméation d'hydrogène comporte un revêtement protecteur (9) et ce revêtement protecteur (9) a une tenue chimique et/ou physique plus élevée que le revêtement (5) bloquant la perméation de l'hydrogène.

7. Cellule d'habitacle (2) d'un véhicule automobile,
la cellule (2) ayant au moins une paroi extérieure (10) pour délimiter la cellule (2) par rapport à l'environnement (U) de la cellule de l'habitacle,
**caractérisée en ce que**
au moins une paroi extérieure (10) est réalisée au moins partiellement comme dispositif de protection (1) selon l'une des revendications précédentes.

8. Véhicule automobile comportant un réservoir d'hydrogène (11) et une cellule d'habitacle (2),
**caractérisé en ce que**
la cellule d'habitacle (2) est une cellule (2) selon la revendication 7.

9. Procédé pour protéger le hall d'intérieur (3) d'une cellule d'habitacle (2) d'un véhicule automobile vis-à-vis d'un réservoir d'hydrogène dans un véhicule automobile comprenant les étapes suivantes :
- fournir une cellule d'habitacle (2) ayant au moins une paroi extérieure (10) et au moins une paroi extérieure (10) par un corps de base (4), le corps de base (4) ayant un matériau composite renforcé de fibres placé entre le volume intérieur (3) et le logement (12) du réservoir d'hydrogène (11), et
- on applique un revêtement (5) bloquant la perméation de l'hydrogène sur le corps de base (4), ce revêtement (5) bloquant la perméation hydrogène comportant des pigments métalliques (6).

10. Procédé selon la revendication 9,
**caractérisé en ce que**
le revêtement (5) bloquant la perméation d'hydrogène comporte un revêtement protecteur (9),
- ce revêtement protecteur (9) ayant une tenue chimique et/ou physique supérieure à celui du revêtement (5) bloquant la perméation de l'hydrogène.
